Europäisches Patentamt

European Patent Office

Office européen des brevets

(11) Veröffentlichungsnummer: **0 481 578 A1**

## (12) EUROPÄISCHE PATENTANMELDUNG

(21) Anmeldenummer: **91250282.0**

(51) Int. Cl.5: **B60N 2/06**, B60N 2/02

(22) Anmeldetag: **14.10.91**

(30) Priorität: **15.10.90 DE 4032678**

(43) Veröffentlichungstag der Anmeldung:
**22.04.92 Patentblatt 92/17**

(84) Benannte Vertragsstaaten:
**BE DE FR GB IT SE**

(71) Anmelder: **Brose Fahrzeugteile GmbH & Co. KG**
**Postfach 1353 Ketschendorfer Strasse 38-50**
**W-8630 Coburg(DE)**

(72) Erfinder: **Treichl, Markus**
**Löwenstrasse 23**
**W-8630 Coburg(DE)**
Erfinder: **Romanski, Bernhard**
**Friedrich-R. 6 d**
**W-8630 Coburg(DE)**

Erfinder: **Preussner, Mathias**
**Nailaer Strasse 6**
**W-8674 Marxgrün(DE)**
Erfinder: **Taubmann, Werner**
**Lauterburgstrasse 6**
**W-8639 Lautertal(DE)**
Erfinder: **Krüg, Bernd**
**Schottenstein 67**
**W-8621 Itzgrund(DE)**
Erfinder: **Neuhauser, Werner**
**Am Wasserturm 7**
**W-8636 Weitramsdorf(DE)**

(74) Vertreter: **Ninnemann, Detlef, Dipl.-Ing. et al**
**Patentanwälte Maikowski & Ninnemann**
**Xantener Strasse 10**
**W-1000 Berlin 15(DE)**

(54) **Zahnstangengetriebe.**

(57) Die Erfindung betrifft ein Zahnstangengetriebe, bei dem eine Gleitführung 4 zwischen der Basis 1, an der die Zahnstange 2 montiert ist und dieser Zahnstange ausgebildet ist. Die Gleitführung ist derart beschaffen, daß bei einer Relativbewegung der Zahnstange 2 gegenüber der Basis 1 die Zahnstange 2 gegen das Ritzel 3 gedrückt wird. Hierdurch wird eine bessere Zahnüberdeckung bei einer Überlastung erzielt, bei der normalerweise die Zahnstange 2 relativ zur Basis 1 verschoben wird.

FIG.1

EP 0 481 578 A1

Die Erfindung betrifft ein Zahnstangengetriebe nach dem Oberbegriff des Anspruchs 1.

Bei motorisch angetriebenen Zahnstangengetrieben, wie sie insbesondere in Sitzverstelleinrichtungen für Kraftfahrzeuge verwendet werden, muß gewährleistet sein, daß der kämmende Eingriff des Ritzels mit der Zahnstange über den gesamten Verstellbereich ausreichend tief ist. Aus der DE-OS 35 01 442 ist es bekannt, die Zahnstange in vertikaler Richtung auf das Ritzel durch eine Feder oder durch die Eigenelastizität der Zahnstange vorzubelasten und dadurch einen ausreichenden, kämmenden Eingriff sicherzustellen.

Es hat sich gezeigt, daß durch die verstellbare Einrichtung auf das Zahnstangengetriebe Kräfte übertragen werden können, die eine derart außerordentliche Belastung darstellen, daß im Belastungsfall die bekannten Vorspannmaßnahmen nicht ausreichen. Dies ist insbesondere bei Kraftfahrzeugsitzverstellungen mit einem Zahnstangengetriebe der Fall, wenn außerordentliche Kräfte infolge eines Fahrzeugcrashs auftreten.

In diesem Fall ist der Eingriff zwischen Ritzel und Zahnstange nicht tief genug, so daß die Zähne wegen mangelnder Überdeckung leicht ausbrechen. Aus diesem Grund können für diese Mechanismen preisgünstige Materialien, die nicht außerordentlich hoch belastbar sind, nicht verwendet werden.

Der Erfindung liegt die Aufgabe zugrunde, ein derartiges Zahnstangengetriebe so auszubilden, daß beim Auftreten außerordentlich hoher Belastungen im Getriebe eine ausreichende Überdeckung der Zähne sichergestellt wird.

Erfindungsgemäß wird diese Aufgabe durch die technische Lehre des Inhalts des Patentanspruchs 1 gelöst.

Die erfindungsgemäße Lösung gewährleistet eine ausreichende Überdeckung der Zähne eines Zahnstangengetriebes beim Auftreten extremer Belastungen im Getriebe, so daß bei Bedarf auch weniger hoch belastbare Materialien als Getriebeteile einsetzbar sind.

Mit Vorteil ist eine Gleitführung zwischen der Basis, an der die Zahnstange montiert ist, und der Zahnstange ausgebildet, die bei einer Relativbewegung der Zahnstange gegenüber der Basis die Zahnstange gegen das Ritzel drückt. Eine derartige Relativbewegung zwischen Zahnstange und Basis findet dann statt, wenn durch eine im Normalbetrieb nicht auftretende Überlast die Montagemittel mit denen die Zahnstange an der Basis angeordnet ist, derart deformiert, beschädigt oder zerstört werden, daß sich die Zahnstange relativ zur Basis bewegen kann. In diesem Fall erteilt die Gleitführung bei dieser Relativbewegung der Zahnstange eine Bewegungskomponente, die zum Ritzel hin gerichtet ist.

Erfindungsgemäß kann stattdessen oder zur Ergänzung eine Gleitführung zwischen dem Ritzel und der vom Zahnstangengetriebe verstellbaren Einrichtung vorgesehen sein, die bei einer Relativbewegung der Einrichtung gegenüber dem Ritzel dieses gegen die Zahnstange drückt.

Die Erfindung ist insbesondere für Kraftfahrzeugsitzverstellungen von Bedeutung. Bei Kraftfahrzeugsitzverstellungen treten bei einem Unfall im Sitzbereich insbesondere durch den angeschnallten Fahrzeuginsassen hervorgerufene, außerordentlich hohe Kräfte auf, die zum Bruch der Verzahnung des Zahnstangengetriebes führen können und damit dessen hemmende Wirkung ausschalten. Durch die Erfindung wird auf die Kraftfahrzeugsitzverstellungen bei einem Unfall das Zahnstangengetriebe durch die auftretenden Kräfte derart zusammengedrückt, daß eine optimale Überdeckung der miteinander kämmenden Zähne erfolgt und dadurch deren Ausbrechen erschwert wird.

Mit besonderem Vorteil ist die Gleitführung derart ausgebildet, daß diese die Zahnstange kraftschlüssig und/oder federnd gegen das Ritzel und/oder das Ritzel gegen die Zahnstange vorspannt.

Der Fachmann hat die Möglichkeit, die Teile dieser Gleitführung aus Metallen, insbesondere Stahl oder Bronze herzustellen. Mit besonderem Vorteil können die Teile als Warm- oder Kaltfließpressteile hergestellt werden.

Ganz besonders vorteilhaft ist es, die Gleitführung elastisch und/oder plastisch verformbar auszubilden. Hierzu können Hohlkörper oder geprägte Teile oder Kunststoffe verwendet werden, die im Belastungsfall elastisch und/oder plastisch verformt werden. Durch diese Ausbildung erfolgt im Fall einer Überbelastung eine Energieaufnahme, die zu einer Dämpfung des gesamten Vorgangs führt. Dadurch, daß eine kraftschlüssige oder federnde Vorspannung zwischen Zahnstange und Ritzel erzeugt wird, was zu einer Spielfreiheit im Betrieb führen kann, wird vermieden, daß im Falle einer Überbelastung zusätzlich unerwünschte Stöße durch das Herausfahren des sonst vorhandenen Spieles auftreten.

Eine einfache Ausführungsform der Gleitführung wird durch die Verwendung von Aufgleitrampen erzielt. Da bei einer linearen Verstellvorrichtung mit einem Zahnstangengetriebe die Überbelastungen in beiden Richtungen auftreten können, sind mit Vorteil zumindest zwei entgegengesetzt geneigte Aufgleitrampen vorgesehen.

Bei einer einfachen Ausführungsform weisen die Gleitführungen Keile mit schräger Ebene auf. Zur Erzielung einer speziellen Gleitkinematik werden mit Vorteil Gleitführungen mit gewölbten Aufgleitrampen verwendet. Es kann vorteilhaft sein, Gleitführungen, die schräge, gerade Ebenen und gewölbte Abschnitte aufweisen, miteinander zu kombinieren.

Insbesondere weisen mit Vorteil die Gleitführungen zumindest zwei Aufgleitrampenpaare mit jeweils entgegengesetzt geneigten Aufgleitflächen auf. Ein derartiges Paar kann beispielsweise durch einen Kreisbogenabschnitt oder durch einen Abschnitt mit elliptischer Kontur gebildet werden. Es ist vorteilhaft, Aufgleitrampenelemente miteinander zu kombinieren. Insbesondere kann die Neigung der entgegengesetzt gerichteten Aufgleitflächen verschieden sein.

Ausführungsbeispiele der Erfindung sollen in der folgenden Beschreibung unter Bezugnahme auf die Figuren der Zeichnung erläutert werden.

Es zeigen:

Figuren 1 bis 3
schematische, teilweise geschnittene Seitenansichten, die Ausführungsform von Aufgleitrampen darstellend,

Figur 4
eine schematische Ansicht einer Gleitführung für das Ritzel, und

Figuren 5 bis 8
schematische Ansicht von Ausführungsformen einer Gleitführung für die Zahnstange.

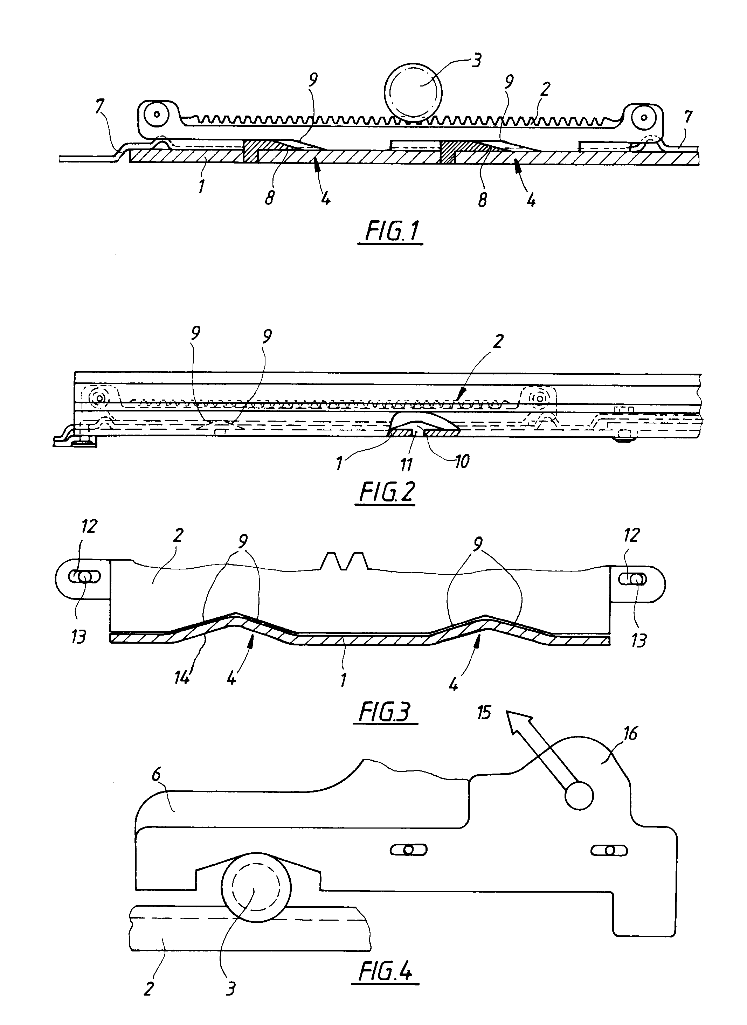

In Figur 1 ist ein Zahnstangenantrieb dargestellt, der eine Zahnstange 2 aufweist. Diese Zahnstange 2 ist, wie schematisch gezeigt, mittels Haltewinkel 7 in Längsrichtung an einer Basis 1 fixiert. Eine weitere Halterung, die die Zahnstange 2 in senkrechter Richtung fixiert, ist nicht gezeigt. Mit dieser Zahnstange 2 steht ein Ritzel 3 in Kämmeingriff.

Bei den dargestellten Ausführungsbeispielen sei angenommen, daß das Zahnstangengetriebe bei einer Kraftfahrzeugsitzverstellung verwendet wird. In diesem Fall ist die Basis 1 ein ortsfestes Element des Sitzes und das Ritzel 3 wird durch einen Stellmotor angetrieben und ist an einem verschiebbaren Bauteil des Sitzes montiert.

Es sind zwei Gleitführungen 4 vorgesehen. Diese Gleitführungen 4 weisen eine Keilfläche 8 auf, die mit der Basis 1 fest verbunden ist. Ferner weisen diese Gleitführungen 4 eine zweite ebene Keilfläche 9 auf, die an der Zahnstange 2 angeordnet oder ausgebildet ist.

Im Normalbetrieb wird die Zahnstange 2 ortsfest an der Basis 1 gehalten. Im Fall einer übermäßigen Belastung, die beispielsweise bei einem Unfall durch den angeschnallten Fahrzeuginsassen auf den Sitz übertragen wird, an dem das motorisch angetriebene Ritzel 3 montiert ist, wird zunächst über den Kämmeingriff des Ritzels 3 mit der Zahnstange 2 diese derart belastet, daß sie in Richtung nach links mitgenommen wird. Bei dieser Bewegung gleiten die Keilflächen 9 auf die Keilflächen 8 auf und dadurch wird die Zahnstange 2 in einen festeren Kämmeingriff gegen das Ritzel 3 gedrückt, so daß die Zahnüberdeckungsflächen vergrößert werden.

Bei dem in Figur 1 dargestellten Ausführungsbeispiel ist eine nur in einer Bewegungsrichtung der Zahnstange 2 wirksame Gleitführung vorgesehen.

In Figur 2 ist ein Ausführungsbeispiel dargestellt, bei dem die Zahnstange 2 zwei entgegengesetzte Aufgleitrampen 9 aufweist, die durch eine gerade Linie miteinander verbunden sein können. In diese Aufgleitrampe greift ein doppelseitiger Aufgleitkeil 10 ein, der einen Zapfen 11 aufweist, welcher in einer Öffnung in der Basis 1 sitzt. Diese Zapfenverbindung kann als Sollbruchstelle ausgebildet sein.

Es ist zu erkennen, daß bei diesem Ausführungsbeispiel ein Aufgleiten in beiden Bewegungsrichtungen der Zahnstange 2 erfolgen kann.

Die Steigung der beiden Keilflächen 9 muß nicht die gleiche sein und kann in der einen Bewegungsrichtung steiler als in der anderen sein.

Statt der dargestellten geradlinigen Keilfläche 9 können gewölbte Keilflächen vorgesehen sein, beispielsweise Kreisabschnitte, elliptische Abschnitte, Kombinationen von ebenen und gewölbten Abschnitten und dergleich um gewünschte Aufgleitcharakteristiken zu erzielen.

Bei der in Figur 3 dargestellten Ausführungsform ist die Zahnstange 2 zusätzlich mittels Langlöcher 12 an Zapfen 13 geführt. Die Basis 1 weist Auswölbungen 14 auf, die in Ausnehmung in der Zahnstange 2 eingreifen, welche die Aufgleitkeilflächen 9 bilden.

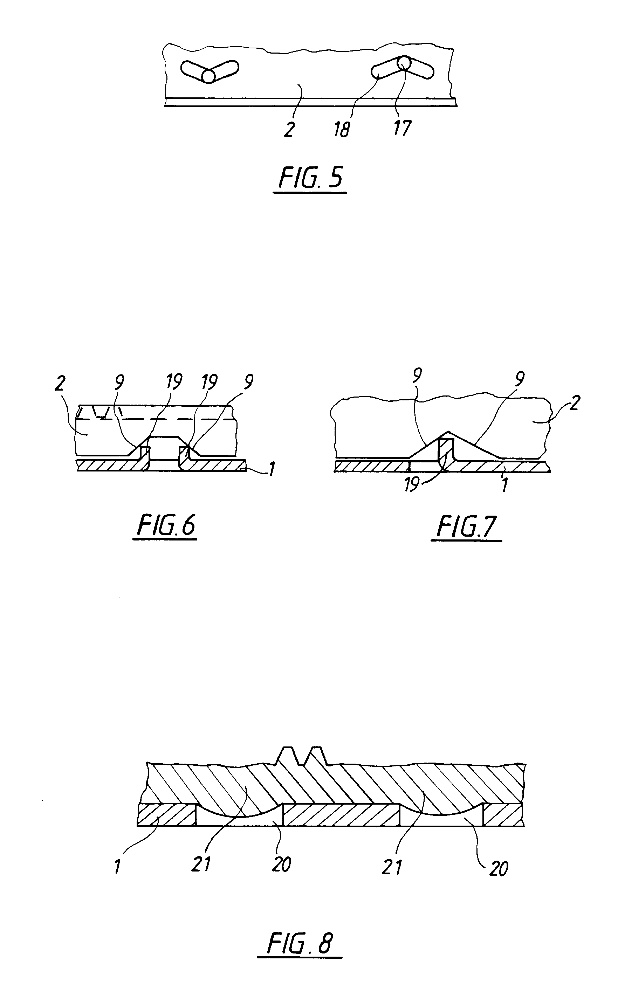

In Figur 4 ist schematisch eine Ausführungsform dargestellt, bei der an einem Fahrzeugsitz 6 ein Gurtpunkt 15 ausgebildet ist. Dieser Gurtpunkt 15 befindet sich an einem Bauelement 16 und dieses Bauelement weist eine doppelte Gleitführung 5 auf, die auf das Ritzel 3 einwirkt. Wenn durch einen übermäßig großen Gurtzug, der auf den Gurtpunkt 15 ausgeübt wird, das Bauelement 16 relativ zur Achse des Ritzels 3 verschoben wird, bewirkt die Gleitführung 5, daß das Ritzel 3 fest gegen die Zahnstange 2 angepreßt wird, so daß der Kämmeingriff der Zähne verstärkt wird. Bei der in Figur 5 dargestellten Ausführungsform weist die Zahnstange 2 Keilflächen bildende Langlöcher 17 auf, in die ortsfest montierte Zapfen 18 eingreifen.

Bei der in Figur 6 dargestellten Ausführungsform weist die Zahnstange 2 zwei durch eine gerade Ebene verbundene Keilflächen 9 auf. Gegen diese Keilflächen 9 liegen Zungen 19 an, die aus der Basis 1 herausgebogen sind.

Das in Figur 7 dargestellte Ausführungsbeispiel weist in der Zahnstange 2 zwei Keilflächen 9 auf, die in einer Linie zusammenstoßen und in der Basis 1 ist eine einzige Zunge 19 ausgebildet, die gegen beide Keilflächen 9 anliegt.

In Figur 8 ist ein Ausführungsbeispiel dargestellt, bei dem in der Basis 1 Öffnungen 20 ausgebildet sind. Die Zahnstange 2 weist Auswölbungen 21 auf, die sich in diese Öffnungen 20 hineinerstrecken. Diese Auswölbungen 21 bilden Keilflächen mit unterschiedlicher Neigung.

**Patentansprüche**

1. Zahnstangengetriebe mit einer ortsfest an einer Basis montierten Zahnstange, dessen mit einem Antriebsmotor verbundenes Ritzel in einer längs der Basis verstellbaren Einrichtung gelagert ist, insbesondere für eine Kraftfahrzeugsitzverstellung, **gekennzeichnet durch** eine Gleitführung (4) zwischen der Basis (1) und der Zahnstange (2), die bei einer Relativbewegung der Zahnstange (2) gegenüber der Basis (1) die Zahnstange (2) gegen das Ritzel (3) drückt und/oder eine Gleitführung (5) zwischen dem Ritzel (3) und der Einrichtung (6), die bei einer Relativbewegung der Einrichtung (6) gegenüber dem Ritzel (3) dieses gegen die Zahnstange (2) drückt.

2. Zahnstangengetriebe nach Anspruch 1, **dadurch gekennzeichnet**, daß die Gleitführung (4, 5) die Zahnstange (2) kraftschlüssig gegen das Ritzel (3) und/oder das Ritzel (3) kraftschlüssig gegen die Zahnstange (2) drückt.

3. Zahnstangengetriebe nach Anspruch 1 oder 2, **dadurch gekennzeichnet**, daß die Gleitführung (4, 5) die Zahnstange (2) federnd gegen das Ritzel (3) und/oder das Ritzel (3) gegen die Zahnstange (2) vorspannt.

4. Zahnstangengetriebe nach mindestens einem der Ansprüche 1 bis 3, **dadurch gekennzeichnet**, daß die Gleitführung (4, 5) elastisch und/oder plastisch verformbar ist.

5. Zahnstangengetriebe nach mindestens einem der Ansprüche 1 bis 4, **dadurch gekennzeichnet**, daß die Gleitführungen (4, 5) Aufgleitraupen aufweisen.

6. Zahnstangengetriebe nach mindestens einem der Ansprüche 1 bis 5, **dadurch gekennzeichnet**, daß die Gleitführungen (4, 5) zumindest zwei entgegengesetzt geneigte Aufgleitrampen aufweisen.

7. Zahnstangengetriebe nach mindestens einem der Ansprüche 1 bis 6, **dadurch gekennzeichnet**, daß die Gleitführungen (4, 5) Keile mit schräger Ebene aufweisen.

8. Zahnstangengetriebe nach mindestens einem der Ansprüche 1 bis 7, **dadurch gekennzeichnet**, daß die Gleitführungen (4, 5) gewölbte Aufgleitrampen aufweisen.

9. Zahnstangengetriebe nach mindestens einem der Ansprüche 1 bis 8, **dadurch gekennzeichnet**, daß die Gleitführungen (4, 5) zumindest zwei Aufgleitrampenpaare mit jeweils entgegengesetzt geneigten Aufgleitflächen aufweisen.

10. Zahnstangengetriebe nach Anspruch 9, **dadurch gekennzeichnet**, daß die Neigung der entgegengesetzten Aufgleitflächen verschieden ist.

_FIG.1_

_FIG.2_

_FIG.3_

_FIG.4_

FIG. 5

FIG.6

FIG.7

FIG. 8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-3 301 149  (BROSE)<br>* Seite 11, Zeile 7 - Seite 13, Zeile 16; Abbildungen 1-8 * * <br>– – – | 1,2,3 | B 60 N 2/06<br>B 60 N 2/02 |
| A | DE-A-3 409 582  (BROSE)<br>* Seite 8, Zeile 10 - Seite 11, Zeile 16; Abbildungen 1-2 * *<br>– – – | 1,2,3 | |
| A | DE-U-8 317 688  (HAMMERSTEIN)<br>– – – | | |
| A,P | WO-A-9 102 664  (BROSE)<br>– – – | | |
| A,P | EP-A-0 416 303  (BROSE)<br>– – – – – | | |

RECHERCHIERTE
SACHGEBIETE (Int. Cl.5)

B 60 N
F 16 C

Der vorliegende Recherchenbericht wurde für alle Patentansprüche erstellt

| Recherchenort | Abschlußdatum der Recherche | Prüfer |
|---|---|---|
| Den Haag | 02 Dezember 91 | HORVATH R.C. |